Europäisches Patentamt

European Patent Office

Office européen des brevets

(11) Publication number : **0 479 528 A2**

# (12) EUROPEAN PATENT APPLICATION

(21) Application number : **91308937.1**

(22) Date of filing : **30.09.91**

(51) Int. Cl.$^5$ : **B08B 1/04**

(30) Priority : **29.09.90 GB 9021238**

(43) Date of publication of application :
**08.04.92 Bulletin 92/15**

(84) Designated Contracting States :
**BE DE ES FR GB NL**

(71) Applicant : **Knights, Michael James**
**Court Lodge, Quebec Road**
**East Dereham, Norfolk NR10 3DR (US)**

(72) Inventor : **Knights, Michael James**
**Court Lodge, Quebec Road**
**East Dereham, Norfolk NR10 3DR (US)**

(74) Representative : **Jones, William**
**Willow Lane House Willow Lane**
**Norwich Norfolk, NR2 1EU (GB)**

(54) **Polythene sheeting cleaner.**

(57) The present invention relates to an apparatus and method for cleaning soiled polythene sheeting.

The method comprises the steps of :

a) Providing apparatus comprising a frame having at least one rounder bar or roller mounted thereto at, or near, at least one end thereof over which the soiled polythene sheeting is drawn, in use of the apparatus, said frame further having one or more watering means and one or more brush means mounted thereto for removing soil and other clinging debris from the polythene sheeting as the sheeting is drawn over the roller(s) ;

b) fitting an initial spread length of the sheeting over the roller(s) of the apparatus ; and

c) drawing the sheeting over the roller(s) whilst subjecting the sheeting to watering by the watering means and brushing by the brush means of the apparatus.

FIGURE I

EP 0 479 528 A2

## Background of the Invention

This invention relates to an apparatus and method for cleaning soiled polythene sheeting which has been removed from a field. As used herein, the term 'polythene' is used broadly to cover plastics materials hawing the properties of polythene which make polythene suitable for use as a crop protective covering.

The present day farming technique of laying long lengths of polythene sheeting on fields to encourage and protect early season crop growth has lead to a problem of disposal of the sheeting once it has served its purpose. Copious quantities of polythene sheeting are used to cover the modern day field acreages and once used such sheeting generally cannot be reused. When laid the sheeting is anchored to the ground by ploughing over the soil along each opposite longitudinal edge of the sheet. The sheets become caked with dirty and heavy earth and require considerable force to drag them from the ground during removal. The conventional methods of collecting the sheeting, manually or by a modified form of straw baler, leave the polythene in a useless pile of waste which is too filthy to be used for scrap and cannot be burned on an open site.

A recent development in the removal of polythene sheeting from fields is the use of machines that collect the sheets in reels. These machines comprise a rotary unit which is driven across a field continuously reeling in the sheeting onto a removable core shaft past a scraper unit. The scraper unit removes excess soil and debris. Once reeled in the sheeting is more manageable. It has been proposed that these reels may be reused. However, the integrity and hence efficacy of the sheeting will be much reduced by use and the recovery process. The polythene may however, possess value as scrap if it can be cleaned up.

## Summary of the Invention

A method for cleaning soiled polythene sheeting which has been removed from a field, comprising the steps of:

a) Providing apparatus comprising a frame having at least one rounded bar or roller mounted thereto at, or near, at least one end thereof over which the soiled polythene sheeting is drawn, in use of the apparatus, said frame further having one or more watering means and one or more brush means mounted thereto for removing soil and other clinging debris from the polythene sheeting as the sheeting is drawn over the roller (s);

b) fitting an initial spread length of the sheeting over the roller(s) of the apparatus; and

c)drawing the sheeting over the roller(s) whilst subjecting the sheeting to watering by the watering means and brushing by the brush means of the apparatus.

Apparatus for cleaning soiled polythene sheeting which has been remove from a field comprising a frame having at least one rounded bar or roller mounted thereto at, or near, at least one end thereof over which the soiled polythene sheeting is drawn, in use of the apparatus said frame hawing one or more watering means and one or more pairs of soft brush means mounted thereto adapted to remove soil and other clinging debris from the polythene sheeting as the sheeting is drawn over the roller(s), one of each of said pair of brush means serving to brush the, in use top surface of the sheeting the other of said pair serving to brush the, in use bottom surface of the sheeting.

Preferably a pair of top brush means are provided to brush the in use, top surface of the sheeting and a pair of bottom brush means are provided to brush the, in use, bottom surface of the sheeting.

Preferably each one of the pair of top brush means is mounted to a respective opposite side of the frame converging towards the other of the pair in opposition to the direction of travel of the sheeting.

Preferably a re-alignment facility is provided to enable maintenance of correct positioning of the plastics sheeting feed into the apparatus.

The re-alignment facility may comprise a trolley on which the polythene sheeting to be cleaned may be placed which trolley is moveable transversely of the direction of travel of the plastics sheeting, in use.

Preferably one or more guide bars are located before at least said top brush means in the direction of travel of the sheeting, in use, to guide the sheeting between the top and bottom brush means of each vertical pair of brush means.

Preferably the, or each, brush means is a power-driven soft roller brush.

Preferably, where one or more pairs of powered roller brushes are provided, each roller brush pair counter-rotates, in use.

Advantageously, the counter-rotating roller brushes revolve in opposition to the direction in which the sheeting is drawn, in use.

One or more rollers may be provided, and each may be motorized.

The frame is preferably pitched to facilitate run-off of water soil and debris from the sheeting, in use. Preferably the frame pitches upwardly in the direction of travel of the sheeting, in use.

Preferably the frame pitches upwardly in the direction of travel of the sheeting, in use.

## Description of the drawings

Figure 1 is a side elevation of apparatus embodying the invention.

Figure 2 is a perspective front view of the apparatus of figure 1.

Figure 3 is a schematic perspective front view of a second embodiment of apparatus.

## Description of the Preferred Embodiment

A preferred embodiment of the present invention will now be more particularly described by way of example and with reference to the accompanying drawings.

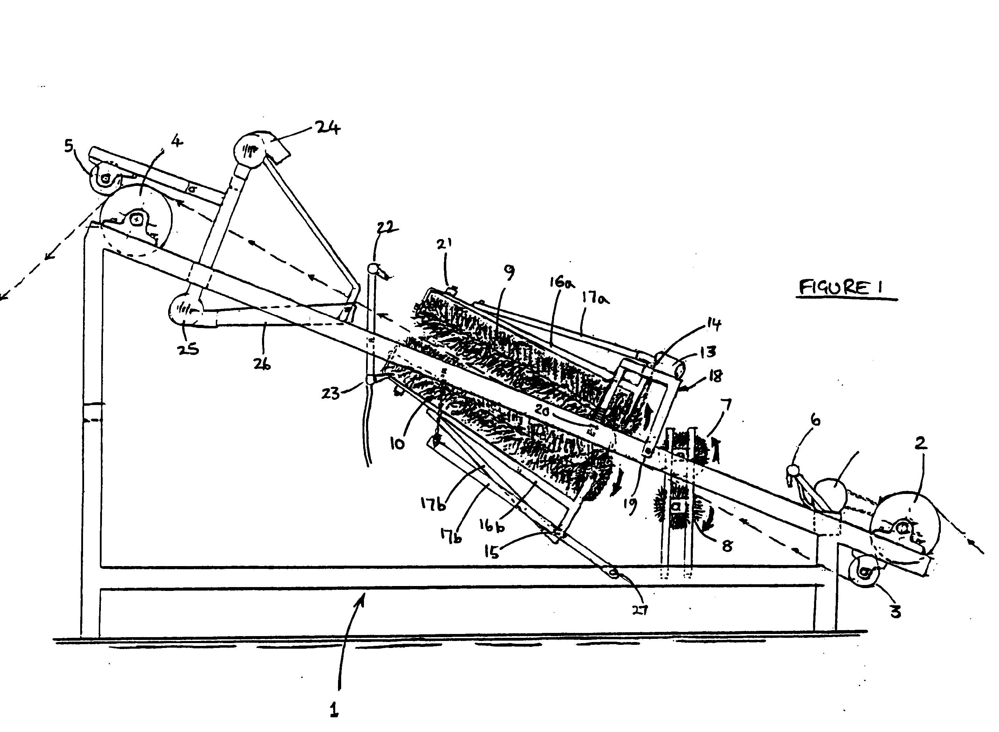

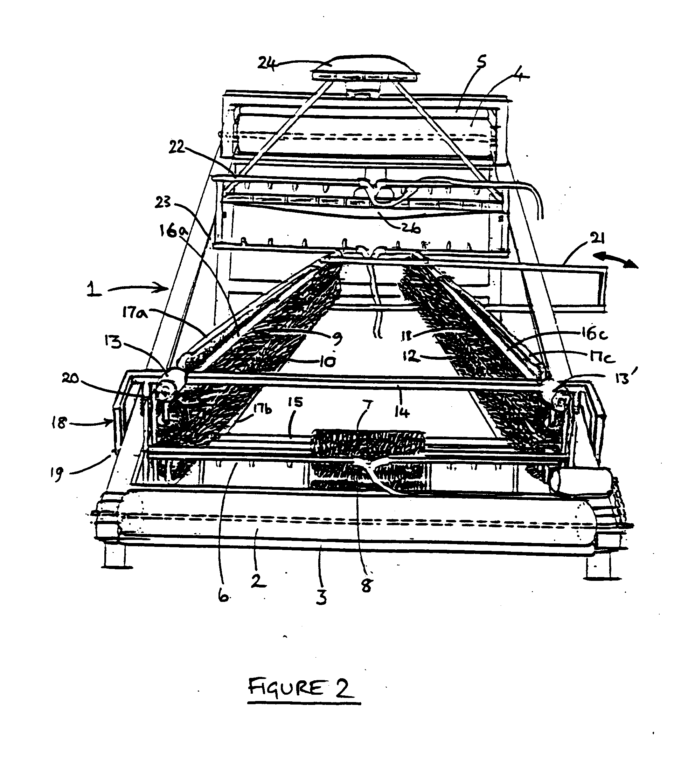

As shown in figure 1 and figure 2, the apparatus comprises a substantially wedge-shaped open frame 1 (pitched downwardly from rear to front. The low front and raised rear ends of the frame are provided with a pair of rollers 2,3 and 4, 5 extending transversely across the frame 1, over which the polythene sheeting is drawn in use. One of each roller pair 2, 3 and 4, 5 is powered by a self-governed vari-speed motor and the other of each pair, 2, 3 and 4, 5 is an idler. The powered rollers act concertedly, in use to smoothly and evenly transport the polythene over the frame. Between the two roller pairs 2, 3 and 4, 5 a number of cleaning implements are provided mounted to the sides of frame 1.

Extending transversely across the frame 1 adjacent to the front end rollers 2, 3 is a water delivery pipe 6 supplied by hose with water or other cleaning fluid from a supply (not shown). The pipe 6 has a number of nozzles to direct jets or sprays of the fluid onto the polythene sheeting, in use.

Shortly behind the delivery pipe 6 the vertically parallel pair of soft roller brushes 7, 8 are mounted to the frame 1 extending transversely across a central region of the frame 1. These brushes 7, 8 are vertically spaced such as to lie with one contacting each face (top and bottom surface) of the polythene sheeting, in use. They are powered, in use, by a single motor (not shown) to counter-rotate at high speed in opposition to the direction of travel of the polythene sheeting (see direction indicating arrows in figure 1). The direction of revolution of these brushes 7, 8 optimises the rate at which the apparatus may be operated, giving effective brushing at high flow rates and at high rates of brush revolution.

Behind the roller brushes 7, 8 two further vertically parallel pairs of soft roller brushes 9, 10 and 11, 12 are mounted pivotally to the frame 1. Each pair of pivoted roller brushes 9, 10 or 11, 12 extends inwardly from a respective pivotal mounting at an opposite one of the sides of frame 1 and converges upon the opposing pair, 9, 10 or 11, 12 rearwardly of the frame 1 (see figure 2). In similar fashion to the pair of transverse roller brushes 7, 8, one of each pair of pivoted roller brushes lies in contact with each face of the polythene sheeting in use. Also each pair of pivotal roller brushes 9, 10 and 11, 12 is powered by a motor 13, 13 to counter-rotate at high speed in opposition to the direction of travel of the polythene sheeting.

The upper, or top, pivotal brushes 9, 11 are pivotally mounted to an upper cross bar 14 extending transversely across the frame 1. Similarly the lower, or bottom, transverse roller brushes 10, 12 are pivotally mounted to a lower cross bar 15 also extending transversely of the frame 1. Each of the four pivotal roller brushes 9, 10, 11, 12 is journalled at each end to a respective holding member 16a, 16b, 16c, 16d. The holding member 16a-d is then pivotally mounted to the respective cross bar 14, 15. Each holding member 16a-d is supported to the respective cross bar 14 15 by a respective strut 17a, 17b, 17c, 17d pivotally mounted to the respective cross bar 14, 15 at a point thereon substantially adjacent the point of pivotal attachment of the respective holding member 16a-d. The motors 13 13' are fitted to the respective holding members 16a 16c of the upper pivotal rollers 9, 11.

The angle of contact between the pivotal roller brushes 9-12 and polythene sheeting drawn through the apparatus, in use, may be adjusted by varying the inclination of the cross bars 14, 15 relative to the frame 1. The upper cross bar 14 is supported at each end by a substantially arch-shaped member 18 having one foot fixed to the frame by a pivot pin 19 and the other foot fixed to the frame 1 by a screw thread 20. The lower cross bar 15 is supported at each end by a bar 27 having one end pivotally mounted to the base of the frame 1 and the other end suspended on a chain attached to an upper part of the frame 1.

Control of pivoting movement of the pivotal roller brushes 9-12 is achieved through a control bar 21 pivotally interconnecting those ends of the holding members 16a-d remote from the cross bars 14, 15. Thus, by moving the control bar 21 the pivotal roller brushes may be swept toward the left or right of the frame 1.

Beyond the pivotal roller brushes 9-12 further back up the frame 1 is mounted a vertically parallel pair of water delivery pipes 22, 23 similar to water delivery pipe 6, extending transversely across the frame 1. The upper of these pipes 22 serves to direct a jet or spray of water or cleaning fluid onto the top surface of the polythene sheeting in use, whilst the lower delivery pipe 23 directs a jet or spray onto the bottom surface of the sheeting.

Mounted to the frame 1 above and behind the pair of water delivery pipes, 22, 23 is a vertically separated pair of air blowers 24, 25. Again, the upper of these blowers 24 operates over the top surface of the polythene sheeting in use, whilst the lower blower operates on the bottom surface of the polythene sheeting. As illustrated the lower blower 25 has an extension duct 26 fitted thereto to direct air into proximity with the sheeting. The upper blower 24 is mounted to a cross beam 27 extending transversely across the frame 1 and raised from the frame 1 by struts 28 fixed to the side of the frame 1. The lower blower 25 is mounted to a further cross bar 29 extending transversely between the sides of the frame 1.

Above and behind the air blowers, 24, 25 are mounted the rear rollers 4, 5. The powered rear roller 4 is journalled to each side of the frame 1, whereas the rear idler 5 is journalled to a pair of struts 30 projecting substantially perpendicularly from the struts 29 supporting the air blower cross bar 28.

To operate the above described apparatus for cleaning collected soiled polythene sheeting the sheeting is first placed in proximity to the front of the apparatus in such a manner that it may be easily unravelled and fed smoothly through the apparatus. Ideally, the polythene sheeting is in reel form, however it is possible to feed stacked sheeting through the apparatus provided that it is loosely stacked without being folded about the longitudinal axis thereof. The leading edge of the sheeting is firstly pulled over the front powered roller 2 and back around the front idler 3 before being fed sequentially up between the pair of transverse roller brushes 7, 8, between the two pairs of pivotal roller brushes 9, 10 and 11, 12 between the pair of water delivery pipes 22, 23 and, finally between the rear powered roller 4 and idler 5. The leading edge of the sheeting may then be fitted to a powered reeling unit (not shown) to draw the sheeting through the apparatus and collect it in a reel. Operation of the apparatus of the present invention may rely solely upon such a powered reeling unit to draw the sheeting through the apparatus. However, the powered rollers 2, 4 of the cleaning apparatus assist the transport of the sheeting and reduce the risk of excessive slackening or tautening of the sheeting.

As the sheeting is drawn through the apparatus over the rollers 2-5, water or another cleaning fluid is sprayed onto the sheeting by nozzles of lower delivery pipe 8 to loosen soil and debris on the sheeting. A central region of the sheeting which then passes between the counter-rotating transverse roller brushes 7, 8 is cleaned first. The polythene sheeting is then subjected to cleaning by the pivotal roller brushes 9, 10 and 11, 12 which are moved from side to side by the control arm 21. This sweeping action of the pairs of pivotal roller brushes and the manner in which they counter-rotate causes dirt to be pushed to the edges of the sheeting. The convergence of the pivotal roller brushes 9, 10 and 11, 12 assists in tautening the sheeting.

Continuing through the apparatus, the sheeting is subjected to sprays of water (or other fluid) from the pair of water delivery pipes 22, 23 washing residual dirt back down towards the brushes 9-12 and 7, 8.

The cleaned sheeting then passes between the air blowers 24, 26 for drying (if necessary and/or affordable, the air blowers 24 26 may heat the air).

The cleaned and dried polythene sheeting leaving the apparatus is most conveniently collected in a reel. Equally, the soil sheeting fed to the cleaning apparatus is most conveniently dispensed from a reel. Because these reels can be extremely large and heavy (agricultural polythene sheeting is generally 2 metres in width and up to 1,000 metres in length) it may advantageous to use a powered unreeling unit to dispense the sheeting to the apparatus and a powered reeling unit to collect sheeting from the apparatus. Where more than one powered reeling unit or roller is used the rate of revolution of each should be adjusted to provide a smooth transport mechanism for the sheeting.

Although the present invention has been described above primarily with respect to one particular embodiment thereof various modifications and alternative embodiments are possible.

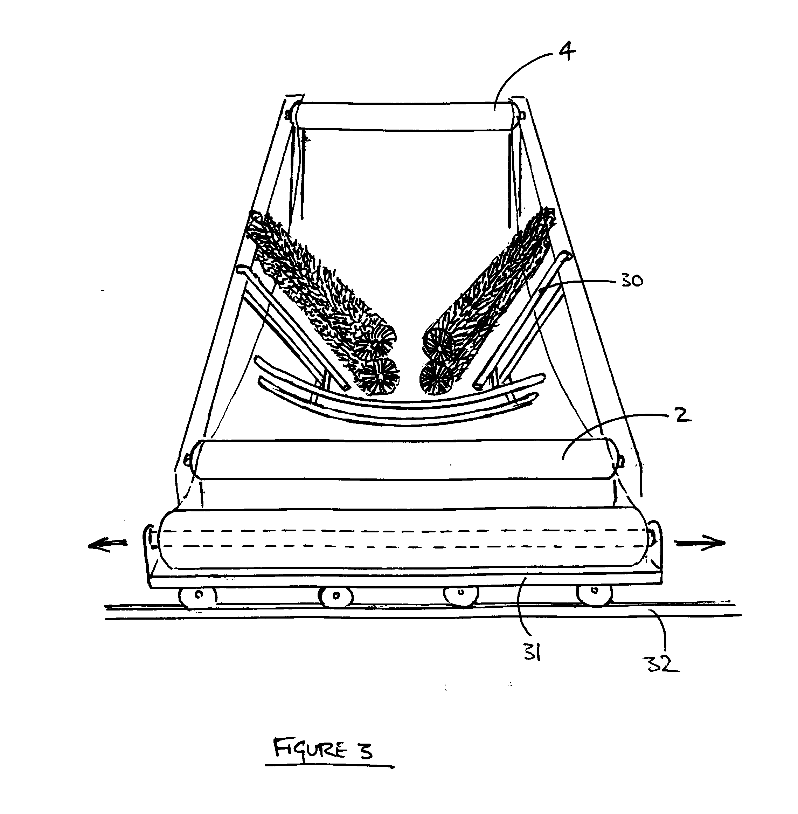

Referring to figure 3 there is shown an embodiment of the invention in which the pairs of converging roller brushes converge in opposition to the direction of travel of the sheeting. In front of these roller brushes is provided a set of guide bars 30 to guide the sheeting between each brush of each vertical pair. With this arrangement the risks of the sheeting becoming jamed are minimized. A further noteable feature of this emobodiment is the provision of a re-alignment mechanism at the in-feed of the apparatus. A reel of soiled polythene sheeting is mounted upon a trolley 31 in turn mounted slideably on a rail 32 extending transversely relative the direction of travel of the sheeting over the machine.

In a potential further improvement to the apparatus the water run-off from the sheeting may be collected in a tank beneath the cleaning apparatus for recirculation to the water delivery pipes 6, 22, 23. Additionally, the control arm 21 of the pivotal roller brushes 9-12 may be adapted for automatic motorized control.

The shape of the frame 1 and the number, type and configuration of the cleaning implements may be modified in innumerable ways.

Once cleaned by the apparatus of the present invention the polythene sheeting becomes a marketable commodity, particularly for scrap.

**Claims**

1. A method for cleaning soiled polythene sheeting which has been removed from a field, comprising the steps of:

a) Providing apparatus comprising a frame having at least one rounder bar or roller mounted thereto at, or near, at least one end thereof over which the soiled polythene sheeting is drawn, in use of the apparatus, said frame further having one or more watering means and one or more brush means mounted thereto for removing soil and other clinging debris from the polythene sheeting as the sheeting is drawn over the roller(s);

b) fitting an initial spread length of the sheeting over the roller(s) of the apparatus; and

c) drawing the sheeting over the roller(s) whilst subjecting the sheeting to watering by the watering means and brushing by the brush means of the apparatus.

2. Apparatus for cleaning soiled polythene sheeting which has been removed from a field comprising a frame having at least one rounded bar or roller mounted thereto at, or near, at least one end thereof over which the soiled polythene sheeting is drawn, in use of the apparatus, said frame having one or more watering means and one or more pairs of soft brush means mounted thereto adapted to remove soil and other clinging debris from the polythene sheeting as the sheeting is drawn over the roller(s), one of each of said pair of brush means serving to brush the, in use, top surface of the sheeting, the other of said pair serving to brush the, in use, bottom surface of the sheeting.

3. Apparatus as claimed in Claim 2, further characterised in that a pair of top brush means are provided, each of said pair being mounted to a respective opposite side of the frame converging towards the other of the pair in opposition to the direction of travel of the sheeting.

4. Apparatus as claimed in Claim 2 or Claim 3, further characterised in that a re-alignment facility is provided to enable maintenance of correct positioning of the plastics sheeting fed into the apparatus.

5. Apparatus as claimed in Claim 4, further characterised in that the re-alignment facility comprises a trolley on which the sheeting to be cleaned may be placed, which trolley is movable transversely of the direction of travel of the sheeting, in use.

6. Apparatus as claimed in any of Claims 2 to 5, further characterised in that one or more guide bars are provided located before at least said top brush means in use, to guide the sheeting between the top and bottom brush means of each vertical pair of brush means.

7. Apparatus as claimed in any of Claims 2 to 6, further characterised in that the, or each, brush means is a power-driven soft roller brush and each of the vertical pairs of powered roller brushes counter-rotate, in use.

8. Apparatus as claimed in Claim 7, further characterised in that the counter-rotating roller brushes revolve in opposition to the direction in which the sheeting is drawn, in use.

9. Apparatus as claimed in any of Claims 2 to 8, further characterised in that the frame is pitched to facilitate run-off of water, soil and/or debris from the sheeting, in use.

FIGURE 1

FIGURE 2

FIGURE 3